Europäisches Patentamt

European Patent Office

Office européen des brevets

(19)

(11) Publication number:       **0 085 246**
                                A1

(12)          **EUROPEAN PATENT APPLICATION**

(21) Application number: **82306809.3**

(22) Date of filing: **20.12.82**

(51) Int. Cl.³: **F 04 C 29/10**
     **B 60 H 3/00, F 24 F 11/02**

(30) Priority: **21.12.81 JP 206627/81**

(43) Date of publication of application:
     **10.08.83 Bulletin 83/32**

(84) Designated Contracting States:
     **DE FR GB IT SE**

(71) Applicant: **SANDEN CORPORATION**
     **20 Kotobuki-cho**
     **Isesaki-shi Gunma-ken(JP)**

(72) Inventor: **Tomimatsu, Shigenao**
     **967-4 Hidaka-cho**
     **Takasaki-shi Gunma-ken(JP)**

(74) Representative: **Pritchard, Colin Hubert et al,**
     **Mathys & Squire 10 Fleet Street**
     **London EC4Y 1AY(GB)**

(54) **A control circuit for a variable displacement air conditioning compressor.**

(57) A control circuit is disclosed for controlling the operation of a variable displacement device in an air conditioning compressor (10) in order to change the capacity of the compressor (10). The control circuit includes at least one solenoid (20) which controls the operation of one more valves in the variable displacement device. The solenoid (20) is connected to a voltage source (18) via a detecting device (21) which includes a pressure sensitive switch responsive to the pressure of the refrigerant in the air conditioning system at the inlet of the compressor (10). The detecting device (21) enables the solenoid (20) to decrease the capacity of the compressor (10) when the refrigerant pressure goes below a first predetermined pressure level and then disables the solenoid (20) when the refrigerant pressure exceeds a second predetermined level. The detecting device (21) also is responsive to the temperature of the refrigerant at the inlet of the compressor (10).

FIG.1

EP 0 085 246 A1

# A CONTROL CIRCUIT FOR A VARIABLE
## DISPLACEMENT AIR CONDITIONING COMPRESSOR

## BACKGROUND OF THE INVENTION

This invention relates to a control system for controlling the operation of an air conditioning system, and more particularly, to a control circuit for a variable displacement compressor in an automobile air conditioning system.

In conventional air conditioners, thermal control in the room generally is accomplished by the intermittent operation of the air conditioning compressor through a magnetic clutch or motor. The magnetic clutch or motor is connected to the compressor and activated by a signal from a thermostat disposed in the room. Once the temperature in the room has been lowered to a desired temperature, the refrigerating or cooling capacity of the air conditioner for supplemental cooling because of further temperature changes in the room, or for keeping the room at the desired temperature, need not be as large. Therefore, after the room has been cooled to the desired temperature, conventional air conditioning compressors are intermittently operated in response to the thermostat signal. Compressors having a large cooling capacity are operated even more intermittently so that the large load required to drive such compressors is intermittently applied to the compressor drive mechanism.

In air conditioning systems for automobiles, the compressor usually is driven by the engine of the automobile. Since the r.p.m. of the automobile engine changes continuously, the rotation frequency of the compressor also changes which in turn rapidly changes the cooling capacity of the air conditioner. Automobile air conditioners generally are designed so that when the compressor is driven by the engine at normal driving speed, the air conditioner operates at optimum capacity. Therefore, when the compressor is driven by the engine at lower operating speed, or during idling, the cooling capacity of the air conditioner is insufficient in comparison with the refrigerating or cooling load. Also, when the compressor is driven by the engine at high operating speed, the cooling capacity is higher than necessary.

One known mechanism for controlling the excessive cooling capacity of an air conditioner operates by heating part of the cool air generated by the air conditioner. Part of the cool air from the evaporator of the air conditioner passes a heating unit which heats the cool air and this heated air is mixed with the remaining cool air to control the temperature of the air which is blown into the room or compartment. In this mechanism, the ratio of cooling capacity to heating capacity is controlled in response to driving frequency. This mechanism for controlling air temperature is complicated and considerable energy is spent to reheat the cool air by using engine power.

In another known embodiment, the magnetic clutch which is disposed on the compressor and connected between the engine and the compressor to transmit rotating motion is intermittently operated to control the operation of the compressor. However, since the magnetic clutch may be operated at high rotation frequency, a sudden force is generated at the moment the clutch is engaged and this sudden force is transmitted to the engine and the compressor. Also, the temperature of the air blown into the compartment drastically changes upon operation of the compressor.

## SUMMARY OF THE INVENTION

It is a primary object of this invention to provide a control system for an air conditioning system, particularly an automobile air conditioner, which controls the cooling capacity of the air conditioner in response to operating conditions to maintain the correct balance between cooling capacity and the refrigerating or cooling load at all times. In particular, it is an object of this invention to provide a control circuit for a variable displacement air conditioning compressor which automatically adjusts the capacity of the compressor in response to the cooling load.

It is another object of this invention to provide a capacity control system for an air conditioning system, particularly an automobile air conditioner, which reduces sudden forces acting on the engine and the compressor.

It is a further object of this invention to provide a capacity control system for an air conditioning system, particularly an automobile air conditioner, which improves performance and efficiency.

The present invention is directed to a capacity control circuit for a variable displacement compressor in a refrigerating or air conditioning system. The compressor includes a variable displacement device which is responsive to the capacity control circuit to change the capacity of the compressor. The capacity control circuit includes a voltage source, a solenoid for actuating the variable displacement device and a detecting device. The detecting device, which is connected between the voltage source and the solenoid, is a pressure sensitive device which is responsive to the suction pressure or refrigerant pressure at the fluid inlet of the compressor. In further embodiments of the present invention, the detecting device is responsive to the temperature of the refrigerant at the fluid inlet of the compressor or both the pressure and temperature of the refrigerant at the fluid inlet.

Further objects, features and aspects of this invention will be understood from the following detailed description of the preferred embodiments of this invention, referring to the annexed drawings.

## BRIEF DESCRIPTION OF THE DRAWINGS

Figure 1 is a schematic diagram of an air conditioning system including a capacity control circuit for a variable displacement compressor according to one embodiment of the invention.

Figure 2 is a characteristic diagram of the refrigerant (cooling) capacity of a compressor operated in conjunction with the capacity control circuit of Figure 1.

Figure 3 is a diagram illustrating the correlation between refrigerant (cooling) load and the suction pressure.

Figure 4 is a diagram illustrating the suction pressure as a function of time during operation of the air conditioning system of Figure 1.

Figure 5 shows a capacity control circuit for a variable displacement compressor in accordance with another embodiment of this invention.

Figure 6 shows a capacity control circuit for a variable displacement compressor in accordance with a further embodiment of this invention.

## DETAILED DESCRIPTION OF THE PREFERRED EMBODIMENTS

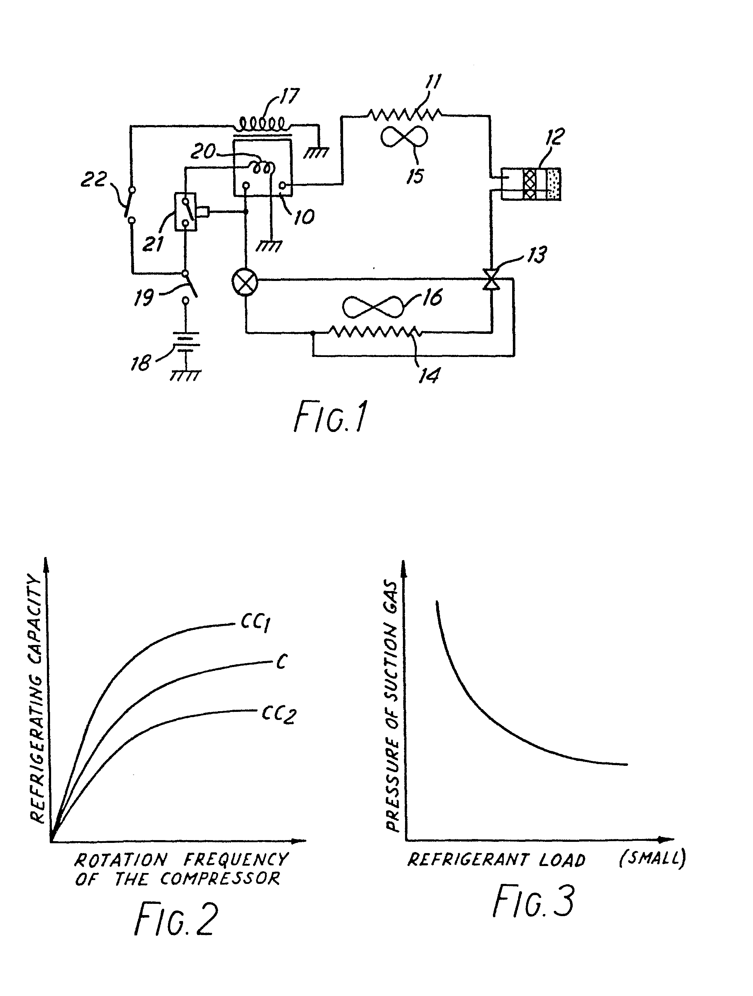

Referring to Figure 1, the basic construction of an air conditioning system, particularly an automobile air conditioning system, is shown. This air conditioning system comprises compressor 10, condenser 11, receiver and dryer 12, a thermostatic expansion device or valve 13 and evaporator 14. These five basic components are coupled in series to form a conventional closed vapor cycle refrigeration circuit. Refrigerant gas is compressed in compressor 10 and supplied to condenser 11 where it is condensed to liquid refrigerant and cooled by forced ventilation of fan 15. The liquid refrigerant is accumulated in receiver and dryer 12, which removes moisture and metal chips from the liquid refrigerant. The liquid refrigerant within receiver and dryer 12 is delivered to thermostatic expansion valve 13. The refrigerant expands as it flows through valve 13 and emerges as a two-phase mixture of liquid and gas, but primarily liquid. The two-phase mixture then flows through evaporator 14. Evaporator 14 operates as a heat exchanger in conjunction with blower 16 which supplies air to the vehicle compartment. Heat is transferred from the incoming air to the liquid refrigerant and the entirety of the refrigerant vaporizes and assumes its gaseous state. The refrigerant gas at the output of the evaporator then is passed to the suction inlet of compressor 10.

Compressor 10, which is shown in block diagram form in Figure 1, is a variable displacement compressor. In the preferred embodiment, compressor 10 is a scroll type compressor including a variable displacement device as shown in copending European patent application No. 82301205.9 filed on March 9, 1982 and copending European patent application No. 82307702.0 filed on December 15, 1982. Compressor 10 is controlled by operation of magnetic clutch 17, which is connected to voltage source 18 through main air conditioning switch 19 and thermostat switch 22. Thermostat switch 22 is a conventional thermostat which is placed in the room or compartment to be cooled to control the operation of magnetic clutch 17 in response to the temperature in the room.

As mentioned above, compressor 10 includes a variable displacement device which is capable of changing the refrigerating or cooling capacity of the compressor. The capacity of the compressor shown in Figure 1 can be

changed to one or two conditions, $CC_I$ or $CC_2$, as shown in Figure 2. In Figure 2, curve C is the normal capacity of prior art compressors. The variable displacement device of compressor 10 includes at least one valve as shown in patent applications Nos. 82301205.9 and 82306701.0 and this valve is controlled by solenoid 20 shown in Figure 1. Solenoid 20 is connected to voltage source 18 through detecting device 21 and main air conditioning switch 19. Detecting device 21 is a pressure sensitive switch which is coupled to the fluid inlet of compressor 10 to sense the suction pressure or refrigerant pressure at the fluid inlet of the compressor. This suction pressure is related to the refrigerant or cooling load as illustrated in Figure 3.

Referring now to Figure 3, the correlation between the refrigerating or cooling load and the pressure of the suction gas will be described. In the refrigeration circuit of the air conditioning system of Figure 1, expansion valve 13 is disposed on the inlet side of evaporator 14 to automatically control the pressure of the refrigerant. Accordingly, when the refrigerating load is large, the temperature difference between the refrigerant passing through evaporator 14 and the air in the compartment is large resulting in a greater evaporation of the liquid refrigerant in evaporator 14. As the amount of evaporation in evaporator 14 increases, the pressure of the refrigerant in evaporator 14 increases. Also, when the compressor is driven at lower operating speeds or during idling, the amount of refrigerant discharged is reduced. However, expansion valve 13 operates to balance the refrigerating or cooling load and circulate the proper amount of refrigerant so that the refrigerant is supplied at high pressure. As mentioned above, when the refrigerating or cooling load is large, or the compressor is driven at lower operating speed or during idling, the evaporating pressure of refrigerant in evaporator 14 increases so that the suction pressure at the inlet of compressor 10 increases. Furthermore, when the refrigerating or cooling load is lower, or compressor 10 is driven at high operation speed, the suction pressure is lower. Thus, the refrigerating or cooling load of the air conditioning system is related to the suction pressure as shown in Figure 3.

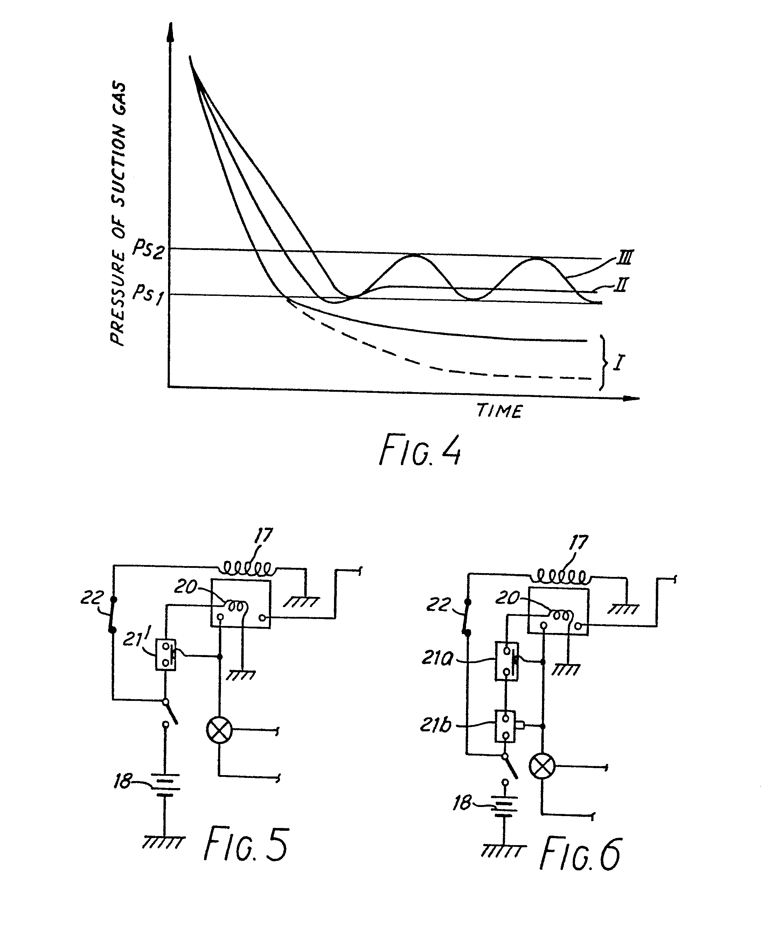

Referring to Figures 1 and 4, the operation of the present invention will be described. Figure 4 shows the suction pressure as a function of time for three different refrigerating or cooling load conditions. Detecting device 21 is responsive to a first predetermined pressure level $Ps_1$ of the suction gas or refrigerant at the fluid inlet of compressor 10 to actuate magnetic coil 20, which operates the variable displacement device to change the displacement of compressor 10 from large volume $CC_1$ to small volume $CC_2$. Detecting device 21 also is responsive to a second predetermined pressure level $Ps_2$ to change the displacement of compressor 10 from small volume $CC_2$ to large volume $CC_1$.

The solid line curve 1 in Figure 4 shows the suction pressure as a function of time when the refrigerating or cooling capacity exceeds the refrigerant or cooling load. In this case, compressor 10 initially operates at a large volume $CC_1$ and then, when the pressure of the suction gas drops below predetermined pressure level $Ps_1$, pressure sensitive switch 21 is closed. Solenoid 20 of the variable displacement device then is energized so that the displacement of the compressor 10 is changed from large volume $CC_1$ to small volume $CC_2$. Compressor 10 continues to operate at small volume $CC_2$ because the refrigerating capacity exceeds the cooling load and the pressure of the suction gas cannot exceed predetermined pressure level $Ps_1$. The dotted line of curve 1 shows the suction pressure as a function of time for a compressor which is not provided with a variable displacement device. By comparing the dotted line curve 1 with the solid line curve 1, it is apparent that the present invention maintains the suction pressure at a higher level than prior art compressors. Thus, the performance of the compressor of the present invention is improved, while the required driving force for the compressor is reduced.

Curve 11 in Figure 4 shows the suction pressure when the refrigerating or cooling load is balanced by a cooling capacity of small volume $CC_2$. In this case, upon initial operation of the air conditioning system, the compressor operates with large volume $CC_1$, and when the suction pressure decreases below predetermined pressure $Ps_1$, the displacement of the compressor is changed from large volume $CC_1$ to small volume $CC_2$. After changing the displacement of the compressor, the suction pressure increases above the predetermined pressure $Ps_1$. However, the suction pressure does not exceed the predetermined pressure $Ps_2$ because the refrigerating capacity

of small volume $CC_2$ and the cooling load are balanced. Thus, compressor 10 continues to operate at small volume $CC_2$.

Curve 111 in Figure 4 shows the suction pressure when the refrigerating or cooling load is larger than the small volume cooling capacity $CC_2$, but smaller than the large volume cooling capacity $CC_I$. In this case, when the suction pressure goes below predetermined pressure $Ps_1$ during operation at large volume $CC_I$, the displacement of compressor 10 is changed from large volume $CC_I$ to small volume $CC_2$. After changing the displacement, the suction pressure increases until the predetermined pressure $Ps_2$ is reached. Then, pressure switch 21 opens so that the variable displacement device operates to change the displacement from small volume $CC_2$ to large volume $CC_I$. The above cycle repeats itself so that the displacement of the compressor continues to change. Furthermore, if during subsequent operation, the suction pressure does not reach the predetermined pressure level $Ps_1$, the displacement of compressor 10 is no longer changed.

Referring now to Figure 5, another embodiment of the present invention is shown. This embodiment is directed to a modification of the capacity control circuit of Figure 1 to improve the operation of the variable displacement device. Detecting device 21' of Figure 5 comprises a temperature switch which detects the temperature of the suction gas or refrigerant at the fluid inlet of compressor 10. This temperature switch closes at a predetermined temperature level to actuate the variable displacement device via solenoid 20 to change the displacement volume of compressor 10. This temperature switch replaces the pressure sensitive swith of Figure 1 because when the engine of an automobile accelerates, or when the engine is quickly brought to an idling condition, the suction pressure is suddenly reduced without relation to the cooling load. In this condition, the variable displacement device would operate intermittently in response to pressure changes, but the temperature of the suction gas does not undergo such drastic changes. Thus, in Figure 5, the variable displacement device is operated by the capacity control circuit in response to temperature changes in the suction gas.

Referring to Figure 6, a further embodiment is shown. In this embodiment, the detecting device includes both pressure sensitive switch 21b

and temperature switch 21a. Pressure sensitive switch 21b and temperature switch 21a are connected in series with voltage source 18 and solenoid 20 to activate solenoid 20 upon the closing of both switches 21a and 21b. Thus, in this embodiment, the operation of the variable displacement device to change the capacity of compressor 10 is dependent on both the pressure and temperature of the suction gas at the fluid inlet of the compressor.

As mentioned above, the air conditioning system of this invention includes a compressor which is provided with a variable displacement device to control the displacement thereof. A capacity control circuit controls the operation of the variable displacement device so that the refrigerating or cooling capacity of the compressor and the cooling load usually are balanced to reduce engine load. Thus, the desired temperature in the compartment can be rapidly and easily obtained without intermittent operation of the compressor.

This invention has been described in detail in connection with the preferred embodiments, but these are examples only and this invention is not restricted thereto. It will be easily understood by those skilled in the art that other variations and modifications can be easily made within the scope of this invention.

## CLAIMS:

1. A control device for a compressor in a refrigerating system, said compressor having a fluid inlet and a variable displacement device to change the capacity of said compressor, said control device comprising:

a voltage source;

actuating means for actuating said variable displacement device to change the capacity of said compressor; and

detecting means coupled to said voltage source and said actuating means for detecting the pressure of the fluid in the fluid inlet of said compressor and enabling said actuating means to actuate said variable displacement device at a predetermined pressure level.

2. The control device of claim 1 wherein said detecting means is a pressure sensitive switch which is responsive to a first predetermined pressure level in the fluid inlet of said compressor to enable said actuating means and a second predetermined pressure level to disable said actuating means.

3. The control device of claim 2 wherein said first predetermined pressure level is lower than said second predetermined pressure level and said detecting means enables said actuating means at said first predetermined pressure level to lower the capacity of said compressor.

4. The control device of claim 1 wherein said detecting means is further responsive to the temperature of the fluid in the fluid inlet of said compressor, said detecting means comprising a pressure switch and a temperature switch.

5. A control device for a compressor in a refrigerating system, said compressor having a fluid inlet and a variable displacement device to change the capacity of said compressor, said control device comprising:

a voltage source;

actuating means for actuating said variable displacement device; and

detecting means coupled to said voltage source and said actuating means for detecting the temperature of the fluid in the fluid inlet of said compressor.

6.   In a refrigerating system having refrigerant flowing through a closed vapor cycle refrigeration circuit including an evaporator, a compressor, a condenser and a thermostatic expansion device, said compressor including a variable displacement device to change the capacity of said compressor, a control device for controlling said variable displacement device comprising:

a voltage source;

solenoid means for actuating said variable displacement device to change the capacity of said compressor; and

detecting means connected to said voltage source and said solenoid means for detecting the refrigerant pressure at the fluid inlet of said compressor and enabling said solenoid means at a first predetermined pressure level, said detecting means disabling said solenoid means at a second predetermined pressure level.

7.   The refrigerating system of claim 6 wherein said detecting means is further responsive to the temperature of the refrigerant at said fluid inlet of said compressor.

8.   The refrigerating system of claim 6 wherein said first predetermined pressure level is lower than said second predetermined pressure level and said detecting means enables said solenoid means at said first predetermined pressure level to lower the capacity of said compressor.

9.   The refrigerating system of claim 8 wherein said detecting means disables said solenoid means at said second predetermined pressure level to increase the capacity of said compressor.

10.   A refrigerating system comprising:

a closed vapor cycle refrigeration circuit for circulating a refrigerant including an evaporator, a compressor, a condenser and a termostatic expansion device connected in series, said compressor having a variable displacement device to change the displacement of said compressor; and

capacity control means coupled to said variable displacement device to actuate said variable displacement device to change the capacity of said compressor in response to the pressure of the refrigerant at the inlet of said compressor.

11.    A refrigerating system according to claim 10 wherein said capacity control means comprises:

a voltage source;

actuating means for actuating said variable displacement device to change the capacity of said compressor; and

pressure sensing means connected to said voltage source and said actuating means for sensing the pressure of the refrigerant at the fluid inlet of said compressor and enabling said actuating means at a first predetermined pressure level to lower the capacity of said compressor.

12.    A refrigerating system according to claim 11 wherein said pressure sensing means disables said actuating means at a second predetermined pressure level which is higher than the first predetermined pressure level to increase the capacity of said compressor.

0085246

FIG.1

FIG.2

FIG.3

FIG. 4

FIG. 5

FIG. 6

## EUROPEAN SEARCH REPORT

### DOCUMENTS CONSIDERED TO BE RELEVANT

EP 82306809.3

| Category | Citation of document with indication where appropriate, of relevant passages | Relevant to claim | CLASSIFICATION OF THE APPLICATION (Int. Cl. 3) |
|---|---|---|---|
| X | <u>DE - A - 1 403 516</u> (LINDE AG)<br>* Totality, especially page 4, line 25 - page 5, line 12; fig. 4; page 8, line 25 - page 9, line 7; claims 1,2,5,11-13 * | 1,6,8,<br>10-12 | F 04 C 29/10<br>B 60 H 3/00<br>F 24 F 11/02 |
| X | <u>CH - A - 173 493</u> (GEBR. SULZER AG)<br>* Fig. 1,3; page 3, right column, lines 3-10; claim 4* | 1,4,5-<br>7,10,11 | |
| X | <u>US - A - 3 924 972</u> (SZYMASZEK)<br>* Fig. 2; column 6, lines 16-31, 57-64 * | 1,5,6,<br>8-12 | |
| X | <u>US - A - 3 767 328</u> (LADUSAW)<br>* Totality, especially column 4, lines 1-15 * | 1,6,10,<br>11 | TECHNICAL FIELDS SEARCHED (Int. Cl. 3) |
| A | <u>DE - B - 1 144 461</u> (FR. SAUTER AG)<br>* Column 1, lines 10-16; column 4, lines 20-39, 51-68 * | 1-3,6,<br>8,10,11 | F 04 C 29/00<br>B 60 H 3/00<br>F 24 F 11/00<br>G 05 B 11/00 |
| P,A | <u>DE - A1 - 3 133 502</u> (KABUSHIKI KAISHA)<br>* Totality * | 1,6,10,<br>11 | |

The present search report has been drawn up for all claims

| Place of search | Date of completion of the search | Examiner |
|---|---|---|
| VIENNA | 28-04-1983 | WITTMANN |